Europäisches Patentamt

European Patent Office

Office européen des brevets

(11) Veröffentlichungsnummer: **0 514 718 A1**

# EUROPÄISCHE PATENTANMELDUNG

(21) Anmeldenummer: **92107756.6**

(22) Anmeldetag: **14.05.92**

(51) Int. Cl.5: **B29C 67/14**

(30) Priorität: **21.05.91 IT MI911393**

(43) Veröffentlichungstag der Anmeldung:
**25.11.92 Patentblatt 92/48**

(84) Benannte Vertragsstaaten:
**DE FR GB IT**

(71) Anmelder: **BAYER AG**

**W-5090 Leverkusen 1 Bayerwerk(DE)**
Anmelder: **SOMIVER S.p.A., SOCIETA
MANUFATTI E IMPIANTI VETRORESINA
Via Dei Soldani
I-22058 Osnago(IT)**

(72) Erfinder: **Branca, Alfonso, c/o Somiver S.p.A.
Societa Manufatti E Impianti Vetroresina
via Dei Soldani, I-22058 Osnago(IT)**
Erfinder: **Preis, Lothar, Dr.
August-Kierspel-Strasse 42
W-5060 Bergisch Gladbach 2(IT)**

(74) Vertreter: **Gremm, Joachim, Dr.
Bayer AG Konzernverwaltung RP Patente
Konzern
W-5090 Leverkusen 1, Bayerwerk(DE)**

(54) **Verfahren zur Herstellung von Faserverbundprofilen.**

(57) Verfahren zur kontinuierlichen Herstellung eines endlosen Faserverbundprofils, in dem man ein konstant bewegtes Faserbündel kontinuierlich mit einem flüssigen Kunstharz imprägniert, das imprägnierte Bündel mit einer dem gewünschten Profil entsprechenden Form umgibt und diese zusammen mit dem imprägnierten Faserbündel durch eine Härtungsstrecke bewegt, bis das Kunstharz sich verfestigt hat, wobei zwischen dem imprägnierten Faserbündel und der Form keine Relativbewegung auftritt sowie eine Vorrichtung zur Durchführung dieses Verfahrens.

EP 0 514 718 A1

Faserverbundprofile im Sinne dieser Erfindung enthalten überwiegend in Längsrichtung angeordnete, parallel liegende Fasern oder Faserbündel, die mit Kunststoffen (Harzen) imprägniert und auf diese Weise miteinander verbunden sind. Ein typisches Produkt dieser Art sind Rundstäbe aus vielen parallel liegenden Glasfasern, die mit einem gehärteten Reaktionsharz (Epoxyharz oder ungesättigtem Polyester) miteinander verbunden worden sind.

Man stellt solche Profile im allgemeinen her, indem man ein Faserbündel (Glasfasern) mit dem noch ungehärteten Reaktionsharz imprägniert und es dann durch eine beheizte Formgebungsdüse (die im allgemeinen bis zu einem Meter lang ist) führt, wobei das Harz härtet. Alternativ kann man auch das harzimprägnierte Faserbündel mit einem hitzeschrumpfenden Faden umwickeln und dann durch eine Härtungsstrecke führen. Der schrumpfende Faden hält dann bei Hitzeeinwirkung den härtenden Strang in Form.

Die mit Hilfe einer Formgebungsdüse hergestellten Profile können verschiedene Querschnitte haben die Wasserstärke darf allerdings nicht zu gering sein; der Querschnitt des Profils entspricht dem Querschnitt der Düse. Die mit Umwicklungsfäden ohne Formgebungsdüse erzeugten Profile sind immer rund.

Bei Verwendung von Formgebungsdüsen muß der harzimprägnierte Faserstrang durch die Düse gezogen werden - man bezeichnet diese Arbeitsweise auch als Pultrusion. Dabei treten zwischen dem Faserstrang und der Düse ganz erhebliche Reibungskräfte auf, die auch die Faserorientierung in dem oberflächennahen Bereichen stören und den maximal möglichen Faseranteil beschränken. Um diese Kräfte zu überwinden, ist ein starker Zug erforderlich, der wiederum die Fasern schädigt. Man ist bei dieser Arbeitsweise also in der Arbeitsgeschwindigkeit und insbesondere in der Wahl der Materialien für die Formgebungsdüse stark eingeschränkt.

Der vorliegenden Erfindung liegt die Erkenntnis zugrunde, daß die Nachteile der Pultrusion und die des mit Umwindungsfaden arbeitenden Verfahrens vermieden werden, wenn zwischen dem imprägnierten Faserstrang und der Form keine Relativbewegung auftritt.

Gegenstand der Erfindung ist somit ein Verfahren zur kontinuierlichen Herstellung eines endlosen Faserverbundprofils, das dadurch gekennzeichnet ist, daß man ein konstant bewegtes Faserbündel kontinuierlich mit einem flüssigen Kunstharz imprägniert, das imprägnierte Bündel mit einer dem gewünschten Profil entsprechenden Form umgibt und diese zusammen mit dem imprägnierten Faserbündel durch eine Härtungsstrecke bewegt, bis das Kunstharz sich verfestigt hat, wobei zwischen dem imprägnierten Faserbündel und der Form keine Relativbewegung auftritt.

Ein weiterer Gegenstand der Erfindung ist eine Vorrichtung zur Durchführung dieses Verfahrens. Sie besteht im wesentlichen aus nahtlos aneinanderpassenden Formsegmente, die jeweils aus einer ebenfalls nahtlos zu einander passenden oberen und unteren Teilform bestehen, die zusammen das zu erzeugende Profil darstellen sowie einer Einrichtung, die die Teilformen so führt, daß sie als Formsegmente den imprägnierten Faserstrang nahtlos umschließen.

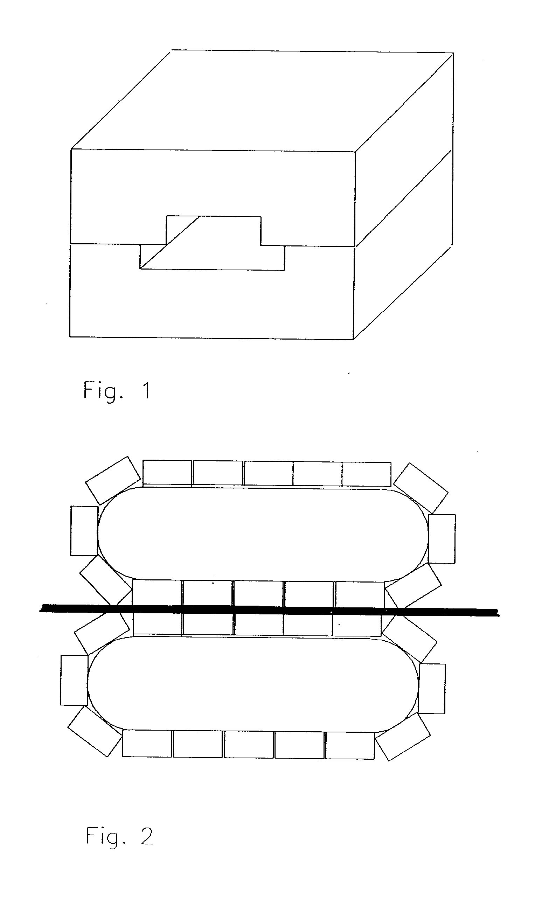

Ein Formsegment besteht also aus zwei Teilen, die durch die Figur 1 veranschaulicht werden. Wesentlich ist, daß beide Teile genau zueinander passen und einen Teilabschnitt des herzustellenden Profils darstellen und daß sie sich nahtlos an das vorangehende und das nachfolgende Segment anschließen.

Die Einrichtung, um die Teilformen zu führen, kann z. B. ein Doppeltransportband oder eine Kette sein, mit dem die Teilformen umlaufen, wie es in der Figur 2 dargestellt ist.

Es kommt also darauf an, daß die Formsegmente am Ende der Härtungsstrecke abgenommen, geöffnet und an den Anfang der Härtungsstrecke zurückgeführt werden, wo sie sich wieder um den bewegten Faserstrang schließen.

Für die Formteile bzw. -segmente sind sehr verschiedene Ausführungsformen gegeben. Sie können z.B. aus Aluminiumblöcken bestehen, in die das eigentliche Formteil aus Stahl eingelassen ist. Solche Segmente lassen sich besonders gut aufheizen. Sie können auch selbst mit Heizvorrichtungen oder Kühleinrichtungen versehen sein. Auch die Einrichtung zum Transport der Segmente muß kein Transportband sein. Es ist auch möglich, die Formteile einzeln vom Ende der Härtungsstrecke an den Anfang zurückzuführen und sie dabei aufzuheizen oder zu kühlen.

Die Arbeitsgeschwindigkeit ist nur von der Gesamtlänge der Formsegmente abhängig. Sollen höhere Geschwindigkeiten erreicht werden, können mehrere Einheiten hintereinander angeordnet werden. Oder man nutzt die erfindungsgemäße Vorrichtung nur zum Stabilisieren des Profilquerschnitts (Anhärtung) und führt die vollständige Härtung in einem separaten Schritt durch (Heißluftofen).

Die Formsegmente können mehrere gleiche oder auch verschiedene Teilformen enthalten.

Da zwischen imprägniertem Faserstrang und Formsegmenten keine Relativbewegung auftritt, kann man z.B. (dünne) Folien auf die Oberfläche anstelle von Trennmitteln einsetzen. Diese Folien können aus thermoplastischen Polymeren bestehen. Es ist aber auch möglich, andere Materialien wie Papier, Metall zu verwenden, wenn man ganz bestimmte Effekte erreichen will (dekorative Oberflächen, spez. elektrischen Eigenschaften usw.).

Das erfindungsgemäße Verfahren eignet sich besonders für empfindliche Fasermaterialien (Kohlenstoffasern) sowie für Faserprodukte mit geringer Längsfestigkeit (z.B. Glasfasermatten); es läßt sehr hohe Fasergehalte zu und erlaubt die schonende Integration sehr sehr empfindlicher Komponenten, z.B. von Lichtwellenleitern.

Ein besonderer Vorteil des neuen Verfahrens ist die Möglichkeit, Querprofilierungen und andere Arten der Oberflächengestaltung zu realisieren z.B. dekorative Muster. Das neue Verfahren bietet darüber hinaus die einzigartige Möglichkeit, kontinuierlich Formteile mit variabler Längs- und Querschnittsform zu erzeugen.

Es ist möglich, zusätzliche Komponenten z.B. Verbindungselemente in die Profile zu integrieren, indem diese Komponenten am Eingang der Formgebungs-Vorrichtung aus einem Magazin zugeführt werden. Gegebenenfalls müssen in den Formsegmenten entsprechende Aussparungen vorgesehen werden. Man kann auch zwei (oder mehr) separate Profile mit (vorgefertigten) Verbindungselementen, die aus einem Magazin zugeführt werden, miteinander verbinden. So sind auf einfache Weise Gitterkonstruktionen und Fachwerke machbar.

Um auch mit schwierigen Härtungsbedingungen fertig zu werden, kann auch halbkontinuierlich gefahren werden (Taktschiebeverfahren).

Die einzelnen Formsegmente sind kurz. Sie sind daher einfach zu fertigen und auch leicht auswechselbar.

Im Gegensatz zu den bekannten Pultrusionsverfahren benötigt das neue Verfahren keine Abzugseinheit.

Das auf diese Weise herstellbare Profile kann jeden beliebigen Querschnitt haben. Diese Querschnitte brauchen auch nicht, wie bei den bisherigen Verfahren über die ganze Länge des Profils gleich zu sein, da sie ja durch die mitwandernde Form definiert werden. Für das erfindungsgemäße Verfahren geeignete Fasern sind in erster Linie Glasfasern (Rovings), man kann aber auch organische Fasern ..., Kohlenstoffasern... benutzen.

Geeignete Kunst-Harze sind Reaktionsharze wie Epoxidharze, ungsättigte Polyetherharze, Phenolharze, Polymide oder thermoplastische Polymere wie Polyolefine, Polyamide, Polyester, Polycarbonate, Polyphenylensulfide, Polyetherketone, Polysulfone und Copolymere.

Reaktionsharze sind zunächst flüssig und werden durch Erhitzen gehärtet. Für Reaktionsharze müssen die Formsegmente also aufgeheizt werden. Thermoplastische Harze werden im geschmolzenen Zustand zum Imprägnieren benutzt. Sie verfestigen sich durch Abkühlen. Folglich müssen die Formelemente bei Verwendung thermoplastischer Harze gegebenenfalls gekühlt werden.

Das erfindungsgemäße Verfahren ermöglicht die Herstellung von Profilen mit beliebigem Querschnitt. Der Querschnitt muß nicht über die ganze Länge des Profils gleich bleiben. Es ist ohne Probleme möglich, mit thermoplastischen Harzen zu arbeiten. Wegen des Wegfalls der Relativbewegung zwischen dem entstehenden Profil und der Form wird die Form erheblich weniger mechanisch beansprucht und hält daher ihr Maß erheblich besser und länger.

Das neue Verfahren eignet sich auch zur Herstellung von Profilen auf Basis thermoplastischer Polymerer, indem vorimprägnierte Faserprodukte (Rovings, Matten, Gewebe) in der erfindungsgemäßen Vorrichtung unter Formgebund konsolidiert werden.

**Patentansprüche**

1. Verfahren zur kontinuierlichen Herstellung eines endlosen Faserverbundprofils, dadurch gekennzeichnet, daß man ein konstant bewegtes Faserbündel kontinuierlich mit einem flüssigen Kunstharz imprägniert, das imprägnierte Bündel mit einer dem gewünschten Profil entsprechenden Form umgibt und diese zusammen mit dem imprägnierten Faserbündel durch eine Härtungsstrecke bewegt, bis das Kunstharz sich verfestigt hat, wobei zwischen dem imprägnierten Faserbündel und der Form keine Relativbewegung auftritt.

2. Vorrichtung zur Durchführung dieses Verfahrens, bestehend im wesentlichen aus nahtlos aneinanderpassenden Formsegmenten, die jeweils aus einer ebenfalls nahtlos zueinander passenden oberen und unteren Teilform bestehen, die zusammen das zu erzeugende Profil darstellen sowie einer Einrichtung, die die Teilformen so führt, daß sie als Formsegmente den imprägnierten Faserstrang nahtlos umschließen.

Fig. 1

Fig. 2

Europäisches
Patentamt

**EUROPÄISCHER RECHERCHENBERICHT**

Nummer der Anmeldung

EP 92 10 7756

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-I-101 401 (ZION)<br>* das ganze Dokument *<br>--- | 1,2 | B29C67/14 |
| X | DE-A-1 504 491 (KOPPERS)<br>* Anspruch 19; Abbildungen 1-8 *<br>----- | 1,2 | |
| | | | **RECHERCHIERTE SACHGEBIETE (Int. Cl.5)**<br><br>B29C |

Der vorliegende Recherchenbericht wurde für alle Patentansprüche erstellt

| Recherchenort | Abschlußdatum der Recherche | Prüfer |
|---|---|---|
| DEN HAAG | 10 AUGUST 1992 | VAN WALLENE A.M. |